# NEUE EUROPÄISCHE PATENTSCHRIFT

(11) **EP 1 110 130 B2**
(45) Veröffentlichungstag und Bekanntmachung des Hinweises auf die Entscheidung über den Einspruch: **25.06.2008**
(45) Hinweis auf die Patenterteilung: 03.12.2003
(21) Anmeldenummer: 99952355.8
(22) Anmeldetag: 10.08.1999
(51) Int. Cl.: G05B 23/02, G06Q 90/00, B60R 16/02

(54) **STEUERGERÄT**
CONTROL DEVICE
APPAREIL DE COMMANDE

(30) Priorität: 10.08.1998 DE 19836126
(43) Veröffentlichungstag der Anmeldung: 27.06.2001
(73) Patentinhaber: Continental Automotive GmbH, 30165 Hannover (DE)
(72) Erfinder: GESSNER, Steffen, D-93059 Regensburg (DE); REICHL, Hans-Jürgen, D-94330 Salching (DE)
(86) Internationale Anmeldenummer: PCT/DE1999/002500
(87) Internationale Veröffentlichungsnummer: WO 2000/010061

(56) Entgegenhaltungen:
- EP-A- 0 658 830
- DE-A- 3 229 411
- DE-A- 3 911 876
- DE-A- 4 040 927
- DE-A- 19 625 619
- GB-A- 2 125 578
- US-A- 5 270 948
- US-A- 5 328 278

## Beschreibung

Die Erfindung betrifft ein Steuergerät, insbesondere Kraftfahrzeug-Steuergerät nach dem Oberbegriff des Anspruchs 1

Ein gemäß dem Oberbegriff des Anspruchs 1 gebildetes Steuergerät ist aus GB 2 125 578 A bekannt.

Es ist auch bereits bekannt, derartige Steuergeräte so auszulegen, daß sie neben ihrer eigentlichen Steuerungsaufgabe auch Überwachungsfunktionen bezüglich des gesteuerten Systems wahrnehmen. Ein bekanntes Kfz-Steuergerät enthält in seinem Programmspeicher Fehlerdiagnoseroutinen, mit denen mehrere Baugruppen oder Komponenten des Kraftfahrzeugs (bspw. Sensoren oder Aktuatoren) regelmäßig auf ihre ordnungsgemäße Funktion überprüft werden. Die dabei erhaltenen Prüfdaten werden dem Kfz-Steuergerät zugeführt und dort von dem Mikroprozessor (unter der Steuerung der Fehlerdiagnoseroutine) in Hinblick auf das Auftreten einer Störung in der überwachten Baugruppe bewertet. Wird eine Störung festgestellt, ermittelt der Mikroprozessor ein Fehlerdiagnoseergebnis, das beispielsweise Art, Ausprägung und Nachweiszeitpunkt des Fehlers angibt. Dieses Fehlerdiagnoseergebnis wird in einem flüchtigen oder löschbaren nichtflüchtigen Fehlerspeicher (Überwachungsergebnis-Speicher) abgelegt, der zu diesem Zweck in dem Kfz-Steuergerät vorgesehen ist. Außerdem kann das Auftreten der Störung dem Fahrer durch eine Warneinrichtung oder ähnliches mitgeteilt werden. Das Kfz wird dann aufgrund des Warnhinweises oder im Rahmen der regelmäßigen Wartung zur Reparatur in eine Werkstatt gebracht. In der Werkstatt wird zunächst der Fehlerspeicher des Kfz-Steuergerätes durch ein geeignetes Kommunikationsgerät ausgelesen. Mit dem dabei erhaltenen Fehlerdiagnoseergebnis kann die Ursache für die aufgetretene Störung in der Regel ermittelt oder zumindest eingegrenzt werden.

Nach einem Reparaturversuch wird der Fehlerspeicher zurückgesetzt, um feststellen zu können, ob der Fehler erneut auftritt. Ist dies nicht der Fall, war die Reparatur erfolgreich. Bei mehrfach fehlgeschlagener Reparatur, d.h. einem neuerlichen Auftreten des Fehlerdiagnoseergebnisses, wird das Steuergerät üblicherweise unter Angabe des Fehlerdiagnoseergebnisses zur Überprüfung an den Hersteller gesandt. Der Hersteller überprüft die Funktionsfähigkeit des Kfz-Steuergerätes. Er ist jedoch nicht in der Lage, die "Fehlergeschichte" zu rekonstruieren, da der Fehlerspeicher gelöscht ist. Dem Hersteller ist es daher nicht möglich, die Angaben der Werkstatt hinsichtlich des Fehlers nachzuprüfen oder im Falle fehlender Information die Fehlerentstehungsgeschichte selber zu ermitteln.

Neben der erwähnten Möglichkeit der Fehlerüberprüfung durch Implementierung einer Fehlerdiagnoseroutine in ein Kfz-Steuergerät ist es auch bereits bekannt, derartige Steuergeräte "lernfähig" zu machen. Dem liegt zugrunde, daß das Steuergerät vom Werk aus mit festen Voreinstellwerten geliefert wird, die aber unvermeidliche Bauteiltoleranzen sowie Veränderungen der Bauteile über ihre Lebensdauer (insbesondere Alterungseffekte) nicht berücksichtigen können. Darüber hinaus können sich ändernde Umwelteinflüsse im Betrieb bemerkbar machen und dazu führen, daß die verwendeten Steuerungsparameter kein optimales Betriebsverhalten bewirken. Mittels einer in dem Programmspeicher des Steuergeräts werkseitig vorgesehenen Adaptionsroutine werden die Voreinstellwerte sowie die Steuerungsparameter daher regelmäßig den tatsächlichen Gegebenheiten angepaßt, wodurch ursprüngliche Fertigungstoleranzen und lebensdauerbedingter Verschleiß berücksichtigt sowie Veränderung des Betriebsverhaltens aufgrund sich ändernder äußerer Umwelteinflüsse regelungstechnisch kompensiert werden können.

Bei einer reparaturbedingten Einsendung des Kfz-Steuergerätes an den Hersteller gehen auch die adaptiv veränderten Voreinstellwerte und Steuerungsparameter verloren. Diese Werte sind bei einer Fehlersuche bzw. beim Nachvollziehen der "Fehlerentstehungsgeschichte" ebenfalls von Interesse, da sich anhand der Abweichungen von adaptiv veränderten Werten und Normalwerten "Anomalitäten" im Betriebsverhalten einer Baugruppe ermitteln lassen.

Der Erfindung liegt die Aufgabe zugrunde, ein Steuergerät zu schaffen, das es ermöglicht, die bei einer erforderlich werdenden werkseitigen Überprüfung des Steuergerätes anfallenden Kosten zu senken. Ferner zielt die Erfindung darauf ab, die bei einer Einsendung des Steuergerätes an den Hersteller entstehenden Kosten zu senken.

Die der Erfindung zugrundeliegende Aufgabenstellung wird durch die Merkmale des Anspruches 1 gelöst.

Durch den nichtflüchtigen, beschreibbaren Sicherungsspeicher wird ein Speichermedium bereitgestellt, bei dem weder bei einem Trennen des Steuergerätes von einer das Steuergerät mit Leistung versorgenden Betriebsspannung noch bei einem bewußtem Löschen des Überwachungsergebnis-Speichers z. B. durch die Werkstatt ein Datenverlust auftritt. Die zuvor in den nichtflüchtigen Sicherungsspeicher übertragenen Überwachungsergebnisse (es kann sich dabei auch um ein einzelnes Überwachungsergebnis handeln) können somit nach dem Einsenden des Steuer gerätes an den Hersteller durch Auslesen des nichtflüchtigen Sicherungsspeichers rekonstruiert werden. Da die Überwachungsergebnisse Informationen bezüglich der "Fehlergeschichte" des gesteuerten Systems enthalten, ist der Hersteller nun nicht mehr auf die diesbezüglichen Angaben der Werkstatt angewiesen. Dies ermöglicht ihm eine einfache und objektive Beurteilung der Fehlersituation auch im Hinblick auf etwaige Regreßansprüche seitens der Werkstatt oder des Kunden.

Vorzugsweise handelt es sich bei der Überwachungsprogrammroutine um eine Fehlerdiagnoseroutine, wobei ein Überwachungsergebnis einen erkannten Fehler in dem gesteuerten System repräsentiert. Alternativ hierzu kann es sich bei der Überwachungsprogrammroutine auch um eine Adaptionsroutine handeln, wobei ein Überwachungsergebnis einen Voreinstellwert und/oder einen von dem Steuergerät im Betrieb verwendeten Steuerungsparameter repräsentiert. Die Überwachungsprogrammroutine kann also sowohl eine Fehlerdiagnoseroutine als auch eine Adaptionsroutine umfassen.

Üblicherweise sind mehrere Überwachungsprogrammroutinen vorgesehen. Dies ist insbesondere dann von Vorteil, wenn das erfindungsgemäße Steuergerät in Art eines zentralen Steuergeräts ein aus mehreren verteilten Baugruppen bestehendes System, insbesondere Kfz steuert, da dann eine Überwachung (Fehlerdiagnose/Adaptionsregelung) jeder einzelnen Baugruppe möglich wird.

Vorzugsweise erfolgt die Übertragung des in dem Überwachungsergebnis-Speicher gespeicherten Überwachungsergebnisses in den nichtflüchtigen Sicherungsspeicher jeweils bei einer Beendigung eines Betriebszyklus des Steuergerätes. Das Überwachungsergebnis kann aber auch während des Betriebszyklus von dem Überwachungsergebnis-Speicher in den nichtflüchtigen Sicherungsspeicher übertragen werden.

Der nichtflüchtige Sicherungsspeicher kann eine vorgegebene Anzahl von N Speicherbereichen umfassen, und die (ggf. teilweise) Übertragung eines aktuellen Überwachungsergebnisses von dem Überwachungsergebnis-Speicher in den nichtflüchtigen Sicherungsspeicher kann derart erfolgen, daß, sofern in dem nichtflüchtigen Sicherungsspeicher bereits ein dem aktuellen Uberwachungsergebnis entsprechendes, älteres Überwachungsergebnis vorhanden ist, dieses ältere Überwachungsergebnis durch das aktuelle Überwachungsergebnis ersetzt wird, oder daß, sofern in dem nichtflüchtigen Sicherungsspeicher kein dem aktuellen Überwachungsergebnis entsprechendes zuvor abgelegtes Überwachungsergebnis vorhanden ist, das aktuelle Überwachungsergebnis in einen freien Speicherbereich des nichtflüchtigen Sicherungsspeichers eingetragen wird. Ist ein solcher freier Speicherbereich nicht mehr vorhanden, wird das älteste in dem nichtflüchtigen Sicherungsspeicher abgespeicherte Überwachungsergebnis durch das aktuelle Überwachungsergebnis ersetzt. Auf diese Weise wird sichergestellt, daß aktuelle Überwachungsergebnisse stets in dem nichtflüchtigen Sicherungsspeicher abgelegt werden, während ältere Überwachungsergebnisse nur im Falle eines vollständig gefüllten Sicherungsspeichers nach dem Prinzip eines FIFO-Registers verworfen werden können.

Weitere vorteilhafte Ausgestaltungen der Erfindung sind in den Unteransprüchen angegeben.

Die Erfindung wird nachfolgend anhand eines einzigen Ausführungsbeispiels unter Bezugnahme auf die Zeichnung beschrieben; in dieser zeigt:
Fig. 1 eine schematische Schaltungsblockdarstellung eines Ausführungsbeispiels der Erfindung; und
Fig. 2 eine schematische Darstellung der in dem (nichtflüchtigen) Sicherungsspeicher verfügbaren Speicherbereiche mit eingetragenen Fehlerergebnissen.

Ein Kfz-Steuergerät 1 weist einen Mikroprozessor 2 auf, der über einen Adreß-/Daten-/Kontrollbus 3 mit einem Festwertspeicher (ROM) 4, einem Schreib-Lese-Speicher (RAM) 5 und einem nichtflüchtigen Speicher (EEPROM) 6 sowie einem flüchtigen oder löschbaren, nichtflüchtigen Überwachungsergebnis-Speicher 7 in Datenverbindung steht. Der Adreß-/Daten-/Kontrollbus 3 des Kfz-Steuergeräts 1 ist mit einer geräteinternen Schnittstelle 8 gekoppelt, die über eine bidirektionale Datenverbindung 9 mit einem zentralen Datenbus 10 eines nicht dargestellten Kfz verbunden ist.

Der zentrale Datenbus 10 steht mit einer Reihe von Baugruppen B1, B2, B3 des Kfz in Datenaustauschverbindung, wobei das Kfz-Steuergerät 1, wie im folgenden noch näher erläutert, sowohl eine Steuerung als auch eine Überwachung der einzelnen Baugruppen B1, B2, B3 durchführt. Bei den Baugruppen B1, B2, B3 kann es sich beispielsweise um einen Sensor, einen Aktuator sowie ein automatisches Getriebe handeln.

Ferner ist das Kfz-Steuergerät 1 mit einem Betriebsstundenzähler 12 versehen, der mit dem Mikroprozessor 2 über eine bidirektionale Datenleitung in Verbindung steht.

Das Kfz-Steuergerät 1 wird im eingebauten Zustand mit einer Betriebsspannung V aus einem Bordnetz 11 des Kfz versorgt, die auch bei ausgeschalteter Zündung (d.h. außerhalb eines Betriebszyklus) dem Kfz-Steuergerät 1 zur Verfügung steht.

Das Kfz-Steuergerät 1 führt in an sich bekannter Weise eine Steuerung der Baugruppen B1, B2, B3 durch. Hierfür ist in einem Speicherabschnitt 4a des Festwertspeichers 4 ein Steuerprogramm implementiert, das üblicherweise aus einer Vielzahl von Steuerprogrammroutinen S1, S2, S3 für die einzelnen Baugruppen B1, B2, B3 besteht. Da es sich bei dem Festwertspeicher (ROM) 4 um einen nichtflüchtigen Speicher handelt, gehen die Daten des Steuerprogramms bei einem Ausfall der Leistungsversorgung durch das Bordnetz 11 nicht verloren.

### Der Steuerungsablauf des Kfz-Steuergerätes 1 ist wie folgt:

Zu Beginn eines Betriebszyklus wird dem Steuergerät 1 über eine Zündsignalleitung I das Einschalten der Kfz-Zündung mitgeteilt. Der Betriebsstundenzähler 12 wird daraufhin angestoßen. Nachfolgend wird das Steuerprogramm (bzw. die einzelnen Steuerprogrammroutinen S1, S2, S3) aus dem Festwertspeicherabschnitt 4a in den Schreib-Lese-Speicher 5 geladen und von dem Mikroprozessor 2 ausgeführt. Im Rahmen des Steuerprogramms kann zunächst eine Initialisierung der einzelnen Baugruppen B1, B2, B3 vorgesehen sein. Beim eigentlichen Steuerungsablauf der Baugruppen B1, B2, B3 empfängt das Kfz-Steuergerät 1 über den zentralen Datenbus 10 und die bidirektionale Datenverbindung 9 Meßdaten, die von nicht dargestellten Sensoren oder den Baugruppen B1, B2, B3 selber ausgegeben werden. Die Steuerung der einzelnen Baugruppen B1, B2, B3 erfolgt dann in üblicher Weise, d.h., es werden die empfangenen Meßdaten mit an geeigneter Stelle in dem Kfz-Steuergerät 1 abgelegten Tabellendaten verglichen und daraufhin von dem Mikroprozessor 2 Steuerdaten berechnet, die über die Schnittstelle 8, die bidirektionale Datenleitung 9 und den zentralen Datenbus 10 der zugehörigen Baugruppe B1, B2, B3 zugeführt werden und in Art einer Rückkopplung das Betriebsverhalten der entsprechenden Baugruppe B1, B2, B3 in gewünschter Weise verändern.

Neben dem Steuerbetrieb führt das Kfz-Steuergerät 1 einen Fehlerdiagnosebetrieb und einen Voreinstellwerte/Steuerungsparameter-Adaptionsbetrieb durch. Zu diesem Zweck sind in dem Festwertspeicherabschnitt 4b1 Fehlerdiagnoseroutinen U1, U2, U3 und in dem Festwertspeicherabschnitt 4b2 Adaptionsroutinen A1, A2, A3 gespeichert.

Im Rahmen des Fehlerdiagnosebetriebs werden zur Fehlerüberprüfung geeignete Prüfdaten (Rohdaten) von den einzelnen Baugruppen B1, B2, B3 abgerufen. Die Prüfdaten werden wiederum über die bidirektionale Datenverbindung 9, die Schnittstelle 8 und den Adreß-/Daten-/Kontrollbus 3 dem Mikroprozessor 2 zugeleitet. Die Daten-Abfragefrequenz richtet sich dabei nach den einzelnen Baugruppen B1, B2, B3 und kann sehr unterschiedlich sein. Während beispielsweise bei der Baugruppe B1 (z.B. Sensor) eine Datenabfrage ständig (beispielsweise alle 10 ms) durchgeführt wird, kann bei anderen Baugruppen (beispielsweise B2 und B3) eine weniger häufige Prüfdatenabfrage ausreichend sein. Je nach betrachteter Baugruppe B1, B2, B3 kann es genügen, die Prüfdaten nur einmal während eines Betriebszyklus abzurufen und es kann auch vorgesehen sein, das Abrufen von Prüfdaten nur dann durchzuführen, wenn eine vorgegebene Bedingung erfüllt ist, beispielsweise die Kühlwassertemperatur einen vorgegebenen Wert überschritten hat.

Die Arbeitsweise des Kfz-Steuergerätes 1 bei einer Störung wird für den Fall des Auftretens eines Fehlers in der Baugruppe B1 erläutert.

Beim Ablauf der der Baugruppe B1 zugeordneten Fehlerdiagnoseroutine U1 (gespeichert im Festwertspeicherabschnitt 4b1) werden von der Baugruppe B1 Prüfdaten erhalten, die außerhalb eines vorgegebenen zugehörigen Toleranzintervalls liegen. Der Mikroprozessor 2 registriert daraufhin das Auftreten eines Fehlers bei B1 und ermittelt mit Hilfe des Betriebsstundenzählers 12 die aktuelle Betriebszeit. Dann erzeugt der Mikroprozessor 2 ein Fehlerergebnis und leitet dieses über den Adreß-/Daten-/Kontrollbus 3 dem Speicherabschnitt 7a des Überwachungsergebnis-Speichers 7 zu. Der Speicherabschnitt 7a wird im folgenden auch als Fehlerergebnisspeicher bezeichnet. Das von dem Mikroprozessor 2 berechnete Fehlerergebnis besteht aus einer Fehlerangabe F, die die Art und/oder die Ausprägung des Fehlers angibt und der aktuellen Betriebszeit t, d.h. der Fehlernachweiszeit. Wenn wie im vorliegenden Beispiel mehrere Baugruppen B1, B2, B3 unter Verwendung zugeordneter Fehlerdiagnoseroutinen U1, U2, U3 überwacht werden, umfaßt die Fehlerangabe F zusätzlich eine die fehlerhafte Baugruppe bezeichnende Information.

Bei Beendigung eines Betriebszyklus, d.h. dem über die Zündsignalleitung I mitgeteilten Ausschalten der Kfz-Zündung, wird gemäß der Erfindung eine Sicherungskopie (Backup) des Inhaltes oder eines Teils des Inhaltes des Fehlerergebnisspeichers 7a in den (nichtflüchtigen) Sicherungsspeicher 6 durchgeführt. Dabei werden sämtliche während des abgelaufenen Betriebszyklus hinzugekommenen Fehlerergebnisse (F, t) in einem Abschnitt 6a des Sicherungsspeichers 6 gesichert.

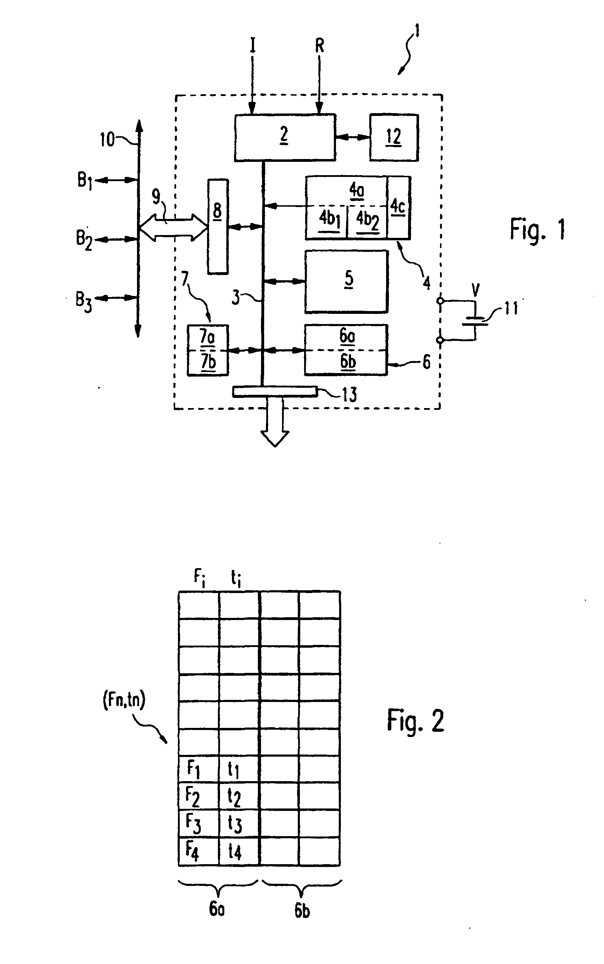

Der Sicherungsablauf wird anhand der Fig. 2 erläutert. Da der Sicherungsspeicher 6 auch allein aus dem Abschnitt 6a bestehen kann, wird dieser im folgenden der Einfachheit halber als Sicherungsspeichers 6a bezeichnet. Die für die Fehlerergebnisabspeicherung vorgesehenen N Speicherbereiche (Speicherplätze) des Sicherungsspeichers 6a sind in der linken Hälfte der Fig. 2 dargestellt. Beispielsweise kann der Sicherungsspeicher 6a maximal zehn (d.h. N = 10) Fehlerergebnisse speichern. Wie bereits angesprochen, besteht jedes Fehlerergebnis dabei aus einer Fehlerangabe Fi, i = 1 bis 10 und einer Fehlernachweiszeit ti, i = 1 bis 10.

In dem Sicherungsspeicher 6a seien vor der Beendigung eines Betriebszyklus bereits vier Fehlerergebnisse (F1, t1), ..., (F4, t4) gespeichert. Sofern während des abgelaufenen Betriebszyklus ein Fehler auftrat, liegt dieser in Form eines Fehlerergebnisses (Fn, tn) in dem Fehlerergebnisspeicher 7a vor. Der Inhalt des Sicherungsspeichers 6a wird dann folgendermaßen aktualisiert: Falls der gleiche Fehler bereits in einem früheren Betriebszyklus aufgetreten ist, stimmt die Fehlerangabe Fn mit einer der Fehlerangaben F1, F2, F3 oder F4 überein. In diesem Fall wird das Fehlerergebnis (Fn, tn) nicht als neuer Fehler dem Sicherungsspeicher 6a hinzugefügt, sondern es wird das bereits eingetragene Fehlerergebnis mit der neuen Fehlernachweiszeit tn aktualisiert. Dies gilt sowohl für Fehler, die wiederholt während aufeinanderfolgender Betriebszyklen auftreten als auch für Fehler, die bezüglich aufeinanderfolgender Betriebszyklen nur sporadisch auftreten, d.h. zwischenzeitlich bereits "geheilt" erschienen.

Die beschriebene Fehlerübertragungsweise von dem Fehlerergebnisspeicher 7a in den Sicherungsspeicher 6a hat zur Folge, daß in dem Sicherungsspeicher 6a ausschließlich unterschiedliche Fehlerergebnisse (und niemals gleiche, zu unterschiedlichen Zeiten aufgetretene Fehler) eingetragen sind.

Es kann vorgesehen sein, daß die in dem Fehlerergebnisspeicher 7a abgelegten Fehlerergebnisse nach einer vorgegebenen Zeit automatisch gelöscht werden. Derart gelöschte Fehlerergebnisse können auch in der Werkstatt nicht mehr rekonstruiert werden. Demgegenüber werden die in dem Sicherungsspeicher 6a gesicherten Fehlerergebnisse in der Regel nicht gelöscht. Lediglich für den Fall, daß mehr als zehn (unterschiedliche) Fehler nachgewiesen werden, werden die Fehlerergebnisse mit der geringsten Nachweiszeit aus dem Sicherungsspeicher 6a herausgeschoben, um Platz für die neu hinzugekommenen, aktuellen Fehlerergebnisse zu schaffen. Durch eine entsprechend große Speicherkapazität N des Sicherungsspeichers 6a kann der Verlust von Fehlerergebnissen jedoch praktisch ausgeschlossen werden.

Der Sicherungsspeicher 6a enthält somit eine Historie sämtlicher erkannter Fehler mit Fehlerangaben F und aktualisierten Fehlernachweiszeitpunkten t.

In einer Reparaturwerkstatt wird das Kfz-Steuergerät 1 über einen Datenausgang 13 an eine in Fig. 1 nicht dargestellte Diagnoseeinheit angeschlossen. Die Diagnoseeinheit liest die in dem Fehlerergebnisspeicher 7a abgespeicherten Fehlerergebnisse aus. Anhand der ausgelesenen Fehlerergebnisse wird, wie bereits beschrieben, ein Reparaturversuch an der defekten Baugruppe B1 unternommen. Danach wird der Speicherinhalt des Fehlerergebnisspeichers 7a durch Eingabe eines Rücksetzsignals R gelöscht, die Fehlerdiagnoseroutine erneut durchgeführt und der Inhalt des Fehlerergebnisspeichers 7a nachfolgend dahingehend untersucht, ob der Fehler nach erfolgter bzw. abgeschlossener Diagnose-Überprüfung neuerlich aufgetreten ist.

Der Sicherungsspeicher 6a des nichtflüchtigen Speichers (EEPROM) 6 ist durch den Löschvorgang nicht betroffen, d.h. die in ihm abgespeicherte "Fehlerhistorie" ((Fn, tn), (F4, t4), ..., (F1, t1)) bleibt erhalten.

Wenn das Kfz-Steuergerät 1 an den Hersteller zurückgeschickt werden muß, weil der Fehler durch Reparatur nicht behoben werden konnte, muß das Kfz-Steuergerät 1 vom Bordnetz 11 getrennt werden. Dadurch geht der Inhalt des Fehlerergebnisspeichers 7a verloren. Aufgrund der in dem Sicherungsspeicher 6a gesicherten Fehlerergebnisse ((Fn, tn), (F4, t4), ..., (F1, t1)) kann der Hersteller dennoch die Fehlerhistorie rekonstruieren. Hierzu wird das Kfz-Steuergerät 1 über den Datenausgang 13 an ein herstellerseitig vorhandenes Auslesegerät angeschlossen und der Speicherinhalt des (nichtflüchtigen) Sicherungsspeichers 6a ausgelesen.

Ein weiterer Anwendungsbereich der Erfindung betrifft die Sicherung adaptiv angepaßter Voreinstellwerte oder Steuerungsparameter. In einem Speicherabschnitt 4c des Festwertspeichers 4 sind werkseitig Voreinstellwerte und Steuerungsparameter abgelegt, auf die die Steuerprogrammroutinen S1, S2, S3 bei einer Erstinbetriebnahme oder nach einem Ausfall des Bordnetzes 11 zurückgreifen. Bauteiltoleranzen und Alterungserscheinungen der einzelnen Baugruppen B1, B2, B3 werden durch die Voreinstellwerte nicht berücksichtigt. Ferner kann durch die Vorgabe von festen Steuerungsparametern sich ändernden Umwelteinflüssen wie beispielsweise Temperatur- und Luftdruckschwankungen nicht ausreichend Rechnung getragen werden. Um trotz der genannten Effekte stets ein optimales Betriebsverhalten der einzelnen Baugruppen B1, B2, B3 zu ermöglichen, sind die in dem Festwertspeicherabschnitt 4b2 abgelegten Adaptionsroutinen A1, A2, A3 vorgesehen. Die Adaptionsroutinen A1, A2, A3 werden ähnlich wie die Fehlerdiagnoseroutine U1, U2, U3 von dem Mikroprozessor 2 fortlaufend oder auch nur gelegentlich aufgerufen. Für jede einzelne Baugruppe B1, B2, B3 kann dabei eine eigene Adaptionsroutine A1, A2, A3 vorgesehen sein.

Im Rahmen der Adaptionsüberwachung werden über die bidirektionale Datenverbindung 9 und die Schnittstelle 8 einlaufende Betriebsdaten (Rohdaten) unter der Steuerung der Adaptionsroutinen A1, A2, A3 von dem Mikroprozessor 2 verarbeitet. Dabei ermittelt der Mikroprozessor 2 adaptierte Voreinstellwerte und adaptierte Steuerungsparameter, die unter den gegebenen Umweltbedingungen eine näher am Optimum liegende Steuerung der jeweiligen Baugruppe B1, B2, B3 ermöglichen. Die adaptierten Voreinstellwerte und adaptierten Steuerungsparameter werden in einen Speicherabschnitt 7b des Überwachungsergebnis-Speichers 7 - der im folgenden auch als Adaptionswertspeicher 7b bezeichnet wird - abgelegt und regelmäßig erneuert.

Solange das Kfz-Steuergerät 1 an das Bordnetz 11 des Kfz angeschlossen ist, bleibt der Speicherinhalt des Adaptionswertspeichers 7b erhalten. Während eines Betriebszyklus greift das Steuerprogramm (d.h. die Steuerprogrammroutinen S1, S2, S3) auf diese Werte/Parameter zurück.

Bei einem Ausfall des Bordnetzes 11 (d.h. V = 0) geht der Inhalt des Adaptionswertspeichers 7b verloren. Um dennoch eine spätere Rekonstruktion der adaptierten Voreinstellwerte und Steuerungsparameter zu ermöglichen, ist der Abschnitt 6b des nichtflüchtigen Speichers (EEPROM) 6 vorgesehen. Dieser wird im folgenden als Sicherungsspeicher 6b bezeichnet. Die Übertragung (Sicherung) der adaptierten Voreinstellwerte und/oder der adaptierten Steuerungsparameter in den Sicherungsspeicher 6b erfolgt prinzipiell in analoger Weise zu der bereits beschriebenen Übertragung der Fehlerergebnisse von dem Fehlerergebnisspeicher 7a in den Sicherungsspeicher 6a. Die Übertragung kann also beispielsweise jeweils bei einer Beendigung eines Betriebszyklus in der Form einer Aktualisierung des Inhalts des Sicherungsspeichers 6b erfolgen.

Bei einer herstellerseitigen Überprüfung des Kfz-Steuergeräts 1 kann der Hersteller nun auch die adaptierten Voreinstellwerte und die adaptierten Steuerungsparameter wiedergewinnen. Diese Größen ermöglichen Aussagen über an dem Kfz aufgetretene Veränderungen oder "Anomalitäten", die zusammen mit den Fehlerergebnissen signifikante Information über den Fahrzeugzustand, d.h. den Zustand der einzelnen überwachten Baugruppen B1, B2, B3 ermöglichen.

Neben der hier beschriebenen Sicherung von Fehlerergebnissen (im Sicherungsspeicher 6a) und/oder Voreinstellwerten sowie ggf. Steuerungsparametern (im Sicherungsspeicher 6b) können in dem Sicherungsspeicher 6 auch andere Werte abgelegt werden, die nach einem Trennen des Kfz-Steuergeräts 1 von dem Bordnetz 11 durch Auslesen in der genannten Weise verfügbar sein sollen.

## Patentansprüche

1. Steuergerät, insbesondere Kraftfahrzeugsteuergerät,
- mit einem Mikroprozessor (2),
- mit einem nichtflüchtigen Programmspeicher (4a, 4b₁, 4b₂), in dem zumindest eine Steuerprogrammroutine zur Steuerung eines mit dem Steuergerät (1) in trennbarer Verbindung stehenden Systems (B₁,B₂, B₃), insbesondere Kraftfahrzeug, und zumindest eine Überwachungsprogrammroutine zur fortlaufenden oder gelegentlichen Überwachung des Systems (B₁, B₂, B₃) abgelegt sind, und
- mit einem flüchtigen oder löschbaren nichtflüchtigen, über ein Rücksetzsignal (R) löschbaren Überwachungsergebnis-Speicher (7; 7a, 7b), in dem ein oder mehrere mittels des Mikroprozessors (2) beim Durchlaufen der Überwachungsprogrammroutine aus von dem System erhaltenen Überwachungsdaten berechnete Überwachungsergebnisse ((Fᵢ, tᵢ), i=1,2 ...) abgelegt werden,
wobei das Steuergerät (1) ferner
- einen nichtflüchtigen, beschreibbaren Sicherungsspeicher (6a, 6b), insbesondere EE-PROM, bei dem weder bei einem Trennen des Steuergerätes von einer das Steuergerät mit Leistung versorgenden Betriebsspannung noch bei einem bewußten durch Eingabe des Rücksetzsignals (R) durchgeführten Löschens des Überwachungsergebnisspeichers (7, 7a, 7b) ein Datenverlust auftritt, sodass die in ihm abgespeicherten Überwachungsergebnisse ((F1, t1), ..., (F4, t4)) erhalten bleiben,
- ein Datenübertragungsmittel (3) zur Übertragung der berechneten Überwachungsergebnisse oder eines Teils derselben ((F1, t1), ..., (F4, t4)) von dem Überwachungsergebnis-Speicher (7; 7a, 7b) in den nichtflüchtigen, beschreibbaren Sicherungsspeicher (6a, 6b), und
- einen Datenausgang (13), über den die in dem nichtflüchtigen Sicherungsspeicher (6; 6a, 6b) abgespeicherten Überwachungsergebnisse ((F1, t1), ..., (F4, t4)) ausgelesen werden können, umfasst.

2. Steuergerät nach Anspruch 1,
**dadurch gekennzeichnet,**
- **daß** es sich bei der Überwachungsprogrammroutine um eine Fehlerdiagnoseroutine (U1, U2, U3) handelt, und
- **daß** ein. Überwachungsergebnis ((Fi, ti), i=1, 2...) einen erkannten Fehler in dem gesteuerten System (B1, B2, B3) repräsentiert.

3. Steuergerät nach Anspruch 1,
**dadurch gekennzeichnet,**
- **daß** es sich bei der Überwachungsprogrammroutine um eine Adaptionsroutine (A1, A2, A3) handelt, und

4. Steuergerät nach den vorhergehenden Ansprüchen,
**dadurch gekennzeichnet,**
**daß** die Überwachungsprogrammroutine sowohl eine Fehlerdiagnoseroutine (U1, U2, U3) als auch eine Adaptionsroutine (A1, A2, A3) umfaßt.

5. Steuergerät nach einem der vorhergehenden Ansprüche,
**dadurch gekennzeichnet,**
**daß** das gesteuerte System, insbesondere Kraftfahrzeug eine Mehrzahl von gesteuerten Baugruppen (B1, B2, B3) umfaßt.

6. Steuergerät nach einem der vorhergehenden Ansprüche,
**dadurch gekennzeichnet,**
**daß** die Übertragung eines in dem flüchtigen oder löchbar nichtflüchtigen Überwachungsergebnis-Speicher (7; 7a, 7b) gespeicherten Überwachungsergebnisses ((Fi, ti), i=1, 2...) in den nichtflüchtigen Sicherungsspeicher (6; 6a, 6b) jeweils bei einer Beendigung eines Betriebszyklus des Steuergerätes (1) erfolgt.

7. Steuergerät nach einem der vorhergehenden Ansprüche,
**dadurch gekennzeichnet,**
**daß** der nichtflüchtige Sicherungsspeicher (6; 6a, 6b) eine vorgegebene Anzahl von N Speicherbereichen umfaßt, und die Übertragung eines aktuellen Überwachungsergebnisses (Fn, tn) von dem Überwachungsergebnis-Speicher (7; 7a, 7b) in den nichtflüchtigen Sicherungsspeicher (6; 6a, 6b) derart erfolgt,
- **daß**, sofern in dem nichtflüchtigen Sicherungsspeicher (6; 6a, 6b) bereits ein dem aktuellen Überwachungsergebnis (Fn, tn) entsprechendes, älteres Überwachungsergebnis vorhanden ist, dieses ältere Überwachungsergebnis durch das aktuelle Überwachungsergebnis (Fₙ, tₙ) ersetzt wird, oder
- **daß**, sofern in dem nichtflüchtigen Sicherungsspeicher (6; 6a, 6b) kein dem aktuellen Überwachungsergebnis (Fₙ, tₙ) entsprechendes zuvor abgelegtes Überwachungsergebnis vorhanden ist, das aktuelle Überwachungsergebnis (Fₙ, tₙ) in einen freien Speicherbereich des nichtflüchtigen Sicherungsspeichers (6; 6a, 6b) eingetragen wird, oder, wenn ein solcher nicht mehr vorhanden ist, das älteste in dem nichtflüchtigen Sicherungsspeicher (6; 6a, 6b) abgespeicherte Überwachungsergebnis durch das aktuelle Überwachungsergebnis (Fₙ, tₙ) ersetzt wird.

8. Steuergerät nach einem der vorhergehenden Ansprüche,
**dadurch gekennzeichnet,**
**daß** ein Überwachungsergebnis in dem nichtflüchtigen Sicherungsspeicher (6; 6a, 6b) in Form eines Überwachungsergebnis-Datensatzes ((Fᵢ, tᵢ), i=1, 2...) eingetragen ist, der eine das Überwachungsergebnis als solches charakterisierende Fehlerangabe (Fᵢ), insbesondere Fehlerart und/oder Fehlerausprägung und/oder fehlerhafte Baugruppe (B₁, B₂, B₃) des Systems, und eine den Nachweiszeitpunkt des Überwachungsergebnisses repräsentierende Zeitinformation (tᵢ) enthält.

## Claims

1. Control device, particularly a motor vehicle control device, comprising
- a microprocessor (2),
- a non-volatile program memory (4a, 4b₁, 4b₂) in which are stored at least one control program routine for controlling a system (B₁, B₂, B₃), particularly a motor vehicle, which is attached to the control device (1) by a separable connection and at least one monitoring program routine for continuous or occasional monitoring of the system (B₁, B₂, B₃), and
- a volatile or erasable non-volatile monitoring result memory (7; 7a, 7b), which can be erased by way of a reset signal (R), in which are stored one or more monitoring results ((Fᵢ, tᵢ), i=1, 2...) computed by means of the microprocessor (2) from the monitoring data obtained by the system during the execution of the monitoring program routine,
with the control device (2) further comprising
- a non-volatile, writeable backup memory (6a, 6b), particularly an EEPROM, in which a data loss neither occurs when the control device is separated from an operating voltage supplying the control device with power nor when the monitoring result memory (7; 7a, 7b) is intentionally erased by inputting the reset signal (R), so that the monitoring results ((F1, t1), ..., (F4, t4)) stored therein remain,
- a data transmission means (3) for transferring the computed monitoring results or a part of the same ((F1, t1),...,(F4, t4)) from the monitoring result memory (7, 7a, 7b) into the non-volatile, writeable backup memory (6a, 6b), and
- a data output (13) via which the monitoring results ((F1, t1),..., (F4, t4)) stored in the non-volatile backup memory (6, 6a, 6b) can be read out.

2. Control device according to claim 1,
**characterised in that**
- the monitoring program routine is an error diagnosis routine (U1, U2, U3) and
- a monitoring result ((Fᵢ, tᵢ), i=1, 2...) represents an error detected in the controlled system (B1, B2, B3).

3. Control device according to claim 1,
**characterised in that**
- the monitoring program routine is an adaptive routine (A1, A2, A3).

4. Control device according to the preceding claims,
**characterised in that**
the monitoring program routine comprises both an error diagnosis routine (U1, U2, U3) and an adaptive routine (A1, A2, A3).

5. Control device according to one of the preceding claims,
**characterised in that**
the controlled system, particularly a motor vehicle, comprises a plurality of controlled modules (B1, B2, B3).

6. Control device according to one of the preceding claims,
**characterised in that**
a monitoring result ((Fᵢ, tᵢ), i=1, 2...) stored in the volatile or erasable non-volatile monitoring result memory (7; 7a, 7b) is transferred individually into the non-volatile backup memory (6; 6a, 6b) in each case upon completion of an operating cycle of the control device (1).

7. Control device according to one of the preceding claims,
**characterised in that**
the non-volatile backup memory (6; 6a, 6b) comprises a predetermined number of N memory areas and the transfer of a current monitoring result (Fn, tn) from the monitoring result memory (7; 7a, 7b) into the non-volatile backup memory (6; 6a, 6b) is effected in such a way that
- if an older monitoring result corresponding to the current monitoring result (Fn, tn) is already present in the non-volatile backup memory (6; 6a, 6b), then this older monitoring result is replaced by the current monitoring result (Fₙ, tₙ), or
- if no previously stored monitoring result corresponding to the current monitoring result (Fₙ, tₙ) is present in the non-volatile backup memory (6; 6a, 6b), then the current monitoring result (Fₙ, tₙ) is entered into a free memory area of the non-volatile backup memory (6; 6a, 6b), or, if such a memory area is no longer available, then the oldest monitoring result stored in the non-volatile backup memory (6; 6a, 6b) is replaced by the current monitoring result (Fₙ, tₙ).

8. Control device according to one of the preceding claims,
**characterised in that**
a monitoring result in the non-volatile backup memory (6; 6a, 6b) is entered in the form of a monitoring result data record ((Fᵢ, tᵢ), i=1, 2...) which contains an error indication (Fᵢ), particularly error type and/or error characteristic and/or defective module (B₁, B₂, B₃) of the system, characterising the monitoring result as such, and an item of time information (tᵢ) representing the detection time of the monitoring result.

## Revendications

1. Appareil de commande, en particulier appareil de commande de véhicule automobile, comprenant
- un micro-processeur (2),
- une mémoire de programme non volatile (4a, 4b₁,4b₂) dans laquelle au moins une routine de commande de programme destinée à la commande d'un système (B₁, B₂, B₃) en particulier un véhicule, qui est en communication déconnectable avec l'appareil de commande (1), et au moins une routine de programme de surveillance pour la surveillance constante ou occasionnelle du système (B₁, B₂, B₃) sont enregistrées, et
- une mémoire de résultats de surveillance volatile ou non volatile effaçable (7 ; 7a, 7b), qui est effaçable au moyen d'un signal de remise à zéro (R), dans laquelle s'enregistre un ou plusieurs résultats de surveillance (Fᵢ, tᵢ), i = 1, 2....) calculé à partir de données de surveillance reçues par le système au moyen du micro-processeur (2) lors de l'exécution de la routine de programme de surveillance,
dans lequel l'appareil de commande (2) comprend en outre
- une mémoire de sauvegarde (6a, 6b) inscriptible non volatile, en particulier une EEPROM, telle que, ni lors d'une séparation de l'appareil de commande d'une tension d'alimentation de l'appareil de commande avec une charge, ni lors d'un effacement connu de la mémoire de résultats de surveillance (7 ; 7a ; 7b) résultant de l'application du signal de remise à zéro (R), une perte de données se produit, de sorte que les résultats de surveillance ((F1, t1,..., (F4, t4)) mémorisés dans cette mémoire de sauvegarde sont conservés,
- un moyen de transmission de données (3) pour la transmission des résultats de surveillance calculés ou d'une partie de ces résultats (F1, t1), ..., (F4, t4)) de la mémoire de résultats de surveillance (7, 7a, 7b) dans la mémoire de sauvegarde non volatile, inscriptible (6a, 6b), et
- une sortie de données (13) par l'intermédiaire de laquelle les résultats de surveillance (F1, t1),..., (F4, t4)) mémorisés dans la mémoire de sauvegarde non volatile (6, 6a, 6b) peuvent être lus.

2. Appareil de commande selon la revendication 1,
**caractérisé en ce que**
- la routine de programme de surveillance est une routine de diagnostic de défaut (U1, U2, U3), et
- un résultat de surveillance ((Fi, ti), i =1, 2...) représente un défaut reconnu dans le système commandé (B1, B2, B3).

3. Appareil de commande selon la revendication 1,
**caractérisé en ce que**
- la routine de programme de surveillance est une routine d'adaptation (A1, A2, A3) et un résultat de surveillance représente une valeur de préréglage adaptée par voie adaptative et/ou un paramètre de commande adapté par voie adaptative, utilisé par l'appareil de commande (1) en service.

4. Appareil de commande selon les revendications précédentes,
**caractérisé en ce que**
la routine de programme de surveillance comprend aussi bien une routine de diagnostic de défauts (U1, U2, U3) qu'une routine d'adaptation (A1, A2, A3)

5. Appareil de commande selon l'une des revendications précédentes,
**caractérisé en ce que**
le système commandé, en particulier un véhicule automobile comprend une pluralité de sous-ensembles commandés (B1, B2, B3).

6. Appareil de commande selon l'une des revendications précédentes,
**caractérisé en ce que**
la transmission d'un résultat de surveillance (Fi, ti), i=1, 2...) dans la mémoire de sauvegarde non volatile (6, 6a, 6b) se produit à chaque fois lors de l'achèvement d'un cycle de service de l'appareil de commande (1).

7. Appareil de commande selon l'une des revendications précédentes,
**caractérisé en ce que**
la mémoire de sauvegarde non volatile (6 ; 6a, 6b) comprend un nombre prédéterminé de N régions de mémoire et la transmission d'un résultat de surveillance actuel (Fn, tn) s'effectue de la mémoire de résultats de surveillance (7 ; 7a, 7b) dans la mémoire de sécurité non volatile (6 ; 6a, 6b) de telle manière que
- dans la mesure où, dans la mémoire de sécurité non volatile (6 ; 6a, 6b) est déjà présent un résultat de surveillance actuel (Fn, tn) correspondant, existe un résultat de surveillance ancien, ce résultat de surveillance ancien remplaçant le résultat de surveillance actuel (Fn, tn), ou bien,
- dès lors que dans la mémoire de sauvegarde non volatile (6 ; 6a ; 6b) il n'existe pas de résultat de surveillance actuel correspondant avant l'apparition d'un résultat de surveillance, le résultat de surveillance actuel (Fn, tn) est enregistré dans une zone de mémoire libre de la mémoire de sauvegarde non volatile (6 ; 6a ; 6b), ou bien, lorsqu'un tel n'existe plus, le résultat de surveillance le plus ancien mémorisé dans la mémoire de sauvegarde non volatile (6 ; 6a ; 6b) est remplacé par le résultat de surveillance actuel (Fn, tn).

8. Appareil de commande selon l'une des revendications précédentes,
**caractérisé en ce que**
un résultat de surveillance est introduit dans la mémoire de sécurité non volatile (6 ; 6a, 6b) sous la forme d'un jeu de données de résultat de surveillance ((Fᵢ, tᵢ, i=1, 2...) qui contient une information de temps (tᵢ) qui représente un résultat de surveillance en tant qu'indication de défaut (Fᵢ) qui caractérise ce résultat, en particulier genre de défaut et/ou intensité du défaut et/ou sous-ensemble affecté du défaut (B1, B2, B3) du système et une information de temps représentant l'instant de preuve du résultat de surveillance.
